# EUROPEAN PATENT SPECIFICATION

(11) **EP 2 373 538 B1**
(45) Date of publication and mention of the grant of the patent: **23.10.2013**
(21) Application number: 09768451.8
(22) Date of filing: 08.12.2009
(51) Int. Cl.: B62M 23/02

(54) **TRANSMISSION UNIT FOR A BICYCLE**
KRAFTÜBERTRAGUNGSEINHEIT FÜR EIN FAHRRAD
UNITE DE TRANSMISSION POUR UNE BICYCLETTE

(30) Priority: 08.12.2008 NL 2002305
(43) Date of publication of application: 12.10.2011
(73) Proprietor: DTI Advanced Technologies B.V., 5653 LD Eindhoven (NL); Sparta B.V., 7327 AD Apeldoorn (NL)
(72) Inventor: VAN DRUTEN, Roëll Marie, NL-5658 EG Eindhoven (NL); VROEMEN, Bas Gerard, NL-5642 CP Eindhoven (NL); JANSSEN, Bart Richard Alexander, NL-5615 SH Eindhoven (NL); BASTIANEN, Johannes Petrus Catharina Michaël, NL-3703 BL Zeist (NL)
(74) Representative: Verhees, Godefridus Josephus Maria
(86) International application number: PCT/NL2009/050751
(87) International publication number: WO 2010/068101

(56) References cited:
- EP-A- 0 832 816
- EP-A- 0 980 821
- EP-A- 1 298 051
- FR-A- 2 873 090
- US-B1- 6 354 980

## Description

### Field of the invention.

The invention relates to a transmission unit for a bicycle, comprising:
- a shaft which is connected to a frame of the bicycle when the transmission unit is applied to the bicycle,
- a wheel hub rotatable around the shaft,
- a transmission concentrically arranged in the wheel hub and having at least two different transmission ratios, which transmission is provided with a support member that is connected to the shaft, and also provided with an input and an output which are concentric to the hub, the input being connected to a driving gear,
- an electromotor concentrically arranged in the wheel hub and having a stator and a rotor, the stator being connected to the frame or the shaft of the bicycle when the transmission unit is applied to the bicycle and the rotor being connected to the input, and
- a planetary gear set arranged in the wheel hub and comprising at least three rotational members which are constituted by a sun gear, a ring gear and a planet carrier carrying at least one planet gear.

The bicycle may be provided with a motor just like a moped, a scooter, a motor-assisted bicycle for motorized assistance or may be arranged without a motor such as a pedalled bicycle. In the latter case the rider forms the drive source to which the input of the transmission can be coupled. The transmission is for example a generally known hub accelerator and the transmission may be a belt transmission or a chain transmission where the driving gear is constituted by a belt gear or sprocket and the other belt gear or sprocket is connected to pedals.

The shaft may also be constituted by the support member of the transmission. In that case the support member is fixed directly to the frame of the bicycle and not via a shaft, and the stator is fixed to the support member and the wheel hub is bearing supported on the support member.

The planetary gear set may be stepped, which is to say that each planet gear may comprise at least two concentric gears side by side and interconnected. Furthermore, the stator may be connected via a connecting element to the frame or to the shaft while the shaft is then connected to the frame. The second rotational member may then be connected to the input or output of the transmission.

### State of the art.

A transmission unit of this type is known from FR-A-2 873 090, which constitutes the closest prior art. In this known transmission unit the planetary gear set is arranged between the transmission and the electromotor with the planet carrier being attached to the shaft. The fixed transmission is then situated on one (eccentric) side of the shaft. As a result, the available space in the wheel hub is not utilized in optimal fashion and the construction is loaded asymmetrically.

### Summary of the invention.

It is an object of the invention to provide a transmission unit of the type defined in the opening paragraph which is more compact than the known transmission unit and where the drive forces are transmitted with the least possible load on the construction of the transmission unit. For this purpose the transmission unit according to the invention is characterised in that, when the transmission unit is applied to the bicycle, from the rotational members a first rotational member is connected to the frame, a second rotational member is connected to the transmission and the third rotational member is connected to the electromotor or the wheel hub, and in that the planetary gear set is concentric to the shaft and in addition to said planet gear comprises at least one further planet gear which is carried by the planet carrier while the rotational members are concentric to one another. This concentric construction provides a symmetric load on the construction and as a result the transmission unit can have a compact construction.

The wheel hub may be part of a driven wheel or may be connected to a wheel hub of a driven wheel.

An embodiment of the transmission unit according to the invention is characterised in that the second rotational member is connected to the input of the transmission and the third rotational member is connected to the electromotor.

In this embodiment the planetary gear set is preferably arranged between the electromotor and the input of the transmission, the first rotational member being constituted by the ring gear.

Another embodiment of the transmission unit according to the invention is characterised in that the second rotational member is connected to the output of the transmission and the third rotational member is connected to the wheel hub.

In this embodiment the first rotational member is preferably constituted by the planet carrier of which the planet gears form at least two pairs of mutually engaging planet gears, one planet gear of each pair engaging the ring gear and the other planet gear engaging the sun gear.

A further embodiment of the transmission unit according to the invention is characterised in that the first rotational member of the planetary gear set is connected to a clutch element which protrudes from between the wheel hub and the input of the transmission to beyond the wheel hub and, when the transmission unit is applied to the bicycle, is connected to the frame of the bicycle. The clutch element may then be directly connected to the frame or be connected to the shaft while the shaft is connected to the frame.

The electromotor is preferably a radial flux motor. Furthermore, preferably the input of the transmission seen in axial direction is exclusively arranged on one side of the transmission.

A further embodiment of the transmission unit according to the invention is characterised in that the transmission unit comprises a torque sensor for sensing the torque on the driving gear, as well as a control unit coupled to the torque sensor and the electromotor, which sensor, if it does not sense any torque, does not cause the electromotor to apply torque either. The control unit and the torque sensor are then preferavly arranged in the wheel hub.

A still further embodiment of the transmission unit according to the invention is characterised in that the control unit causes the electromotor to apply counter torque while the transmission is being switched, which counter torque is opposed to the drive torque applied by the driving gear during operation. As a result there is no load on the transmission during the switching operation.

Yet another embodiment of the transmission unit according to the invention is characterised in that the transmission is an automatic transmission which switches between the transmission ratios in dependence on the rpm and/or the driving torque on the input.

Yet again another embodiment of the transmission unit according to the invention is characterised in that the transmission comprises two parallel driving lines at least one of which always transmitting the driving torque.

A further embodiment of the transmission unit according to the invention is characterised in that the the transmission comprises a switching element that protrudes to beyond the wheel hub from between the shaft and the input.

### Brief description of the drawings.

The invention will be described below in more detail based on an example of embodiment of the transmission unit according to the invention represented in the drawing figures, in which:
Fig. 1 shows a lay-out of a first embodiment of the transmission unit according to the invention;
Fig. 2 gives a diagrammatic representation of the transmission unit shown in Fig. 1;
Fig. 3 gives a diagrammatic representation of a variant of the embodiment represented in Fig. 2;
Fig. 4 shows a lay-out of a second embodiment of the transmission unit according to the invention;
Fig. 5 gives a diagrammatic representation of the transmission unit shown in Fig. 4; and
Fig. 6 gives a diagrammatic representation of a variant of the embodiment represented in Fig. 5.

### Detailed description of the drawings.

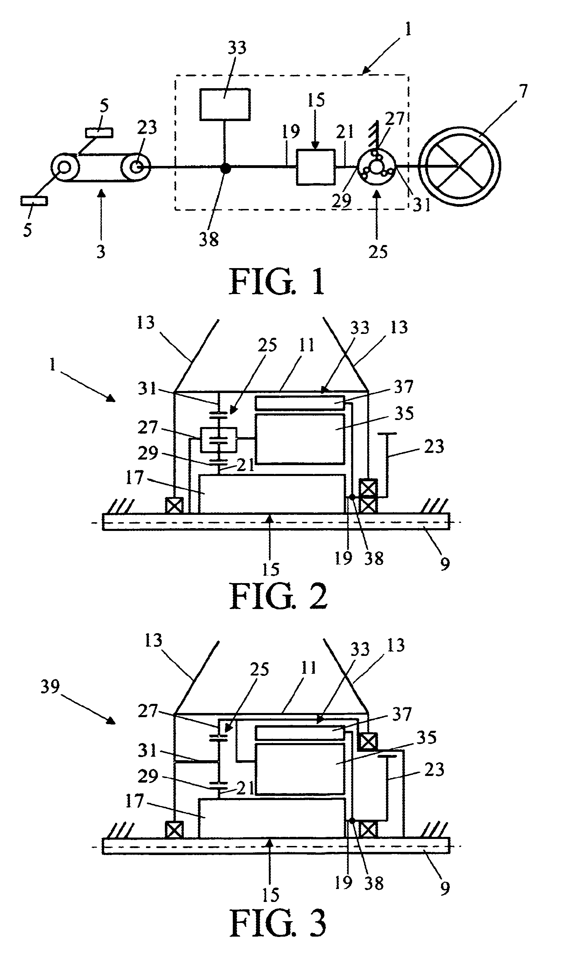

Figs. 1 and 2 show a first embodiment of the transmission unit according to the invention as forming part of a bicycle. The transmission unit 1 is arranged between a belt or chain transmission 3 which is connected to pedals 5 and a wheel 7 of the bicycle. The transmission unit 1 comprises a shaft 9 which is connected to a frame of the bicycle, as well as a wheel hub 11 rotatable around the shaft and in which spokes 13 of the wheel are mounted.

The transmission unit 1 further comprises a transmission 15 having at least two different transmission ratios. The transmission has a support member 17 (for example the transmission housing) which is connected to the shaft 9 (see Fig. 2) as well as an input 19 and an output 21 which are concentric to the wheel hub 11. The input 19 is in this case constituted by a shaft to which a driving gear 23 is mounted and the output 21 is coupled to the wheel hub 11 via a planetary gear set 25. The planetary gear set comprises a first rotational member 27 which is formed in this embodiment by a planet carrier and which is fixedly connected to the shaft 9, as well as a second rotational member 29 constituted by a sun gear which is connected to the output 21 of the transmission, and a third rotational member 31 constituted by a ring gear which is connected to the wheel hub 11. On the planet carrier there are three pairs of interengaging planet gears one of which engaging the sun gear and the other the ring gear.

The transmission unit 1 further includes an electromotor 33 having a stator 35 which is connected to the shaft 9 and to the first rotational member 27, and a rotor 37 which is connected to the input 19 of the transmission via a node 38. The stator 35 and the rotor 37 of the electromotor 33 are concentric to the wheel hub 11 (see Fig. 2).

During the switching of the transmission 15 from one to the other transmission the electromotor 33 can produce a counter torque that is opposed to the drive torque applied by the drive source (cyclist) by means of the pedals 5. The transmission 15 may be an automatic transmission which switches between the transmission ratios in dependence on the rpm and/or the drive torque on the input 19.

Fig. 3 gives a diagrammatic representation of a variant of the embodiment represented in Fig. 2. All component parts that are equal to those of the first embodiment described hereinbefore are indicated by like reference numerals. In contrast to the first embodiment, in this transmission unit 39 the planet carrier constituting the third rotational member 31 in this embodiment comprises several planets and is connected to the wheel hub 11 and the first rotational member 27 which is now constituted by the ring gear is connected to the shaft 9.

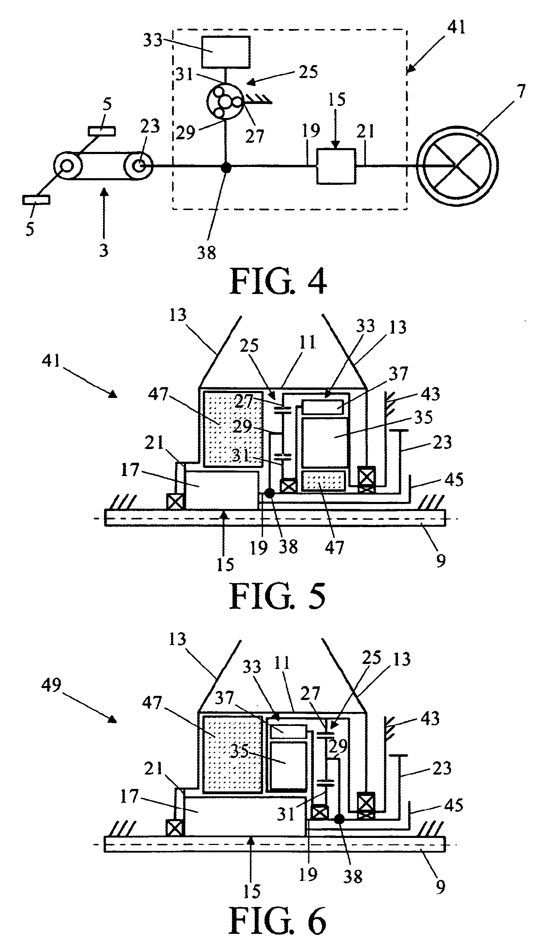

Figs. 4 and 5 represent a second embodiment of the transmission unit according to the invention, again as component parts of a bicycle. All component parts that are equal to those of the first embodiment described hereinbefore are indicated by like reference numerals.

In this transmission unit 41 the planetary gear set 26 is not installed between the transmission 15 and the wheel hub 11, but between the electromotor 33 and the node 38. The third rotational member 31 of the planetary gear set is then constituted by the sun gear and connected to the rotor 37 of the electromotor 33, the first rotational member 27 constituted by the ring gear is connected to a frame 43 of the bicycle and to the stator 35 of the electromotor 33 and the second rotational member 27 constituted by the planet carrier is connected to the input shaft 19 of the transmission 15. On the planet carrier are arranged three planet gears which engage the sun gear and the ring gear.

The input shaft 19 of the transmission 15 is connected to the driving gear 23 of the belt or chain transmission 3 via the node 38. The output shaft 21 of the transmission 15 in its turn is connected to the wheel hub 11.

Fig. 5 furthermore depicts a switching element 45 for changing the transmission ratio of the transmission 15. The switching element protrudes from between the shaft and the input of the transmission to beyond the wheel hub. In this transmission unit 41 the transmission 15 may be arranged as a manually or automatically operated transmission. The electronic control unit 47 for controlling/driving the electromotor 33 in the transmission unit shown in Figs. 4 and 5 is accommodated in the wheel hub 11 so that a compact unit is obtained.

The electromotor 33 as well as the transmission 15 and the planetary gear set 25 in this transmission unit 41 are all concentric to the wheel hub 11 (see Fig. 5).

Fig. 6 gives a diagrammatic representation of a variant of the embodiment represented in Fig. 5. All component parts that are equal to those of the second embodiment described hereinbefore are indicated by like reference numerals. The planetary gear set 25 is accommodated here on the other side of the electromotor 33.

Albeit the invention has been described in the foregoing based on the drawings, it should be observed that the invention is not by any manner or means restricted to the embodiment shown in the drawings. The invention also extends to all embodiments deviating from the embodiment shown in the drawings within the scope defined by the claims. For example, the transmission 15 may also comprise two parallel driving lines of which at least one transmits the driving torque.

## Claims

1. A transmission unit (1) for a bicycle, comprising:
- a shaft (9) which is connected to a frame of the bicycle when the transmission unit is
applied to the bicycle,
- a wheel hub (11) rotatable around the shaft (9),
- a transmission (15) concentrically arranged in the wheel hub (11) and having at least two different transmission ratios, which transmission (15) is provided with a support member (17) that is connected to the shaft (9), and also provided with an input (19) and an output (20) which are concentric to the hub (11), the input (19) being connected to a driving gear
- an electromotor (33) concentrically arranged in the wheel hub (11) and having a stator (35) and a rotor (37), the stator (35) being connected to the frame or the shaft (9) of the bicycle when the transmission unit is applied to the bicycle and the rotor (27) being connected to the input (19),
and
- a planetary gear set (25) arranged in the wheel hub (11) and comprising at least three rotational members which are constituted by a sun gear, a ring gear and a planet carrier carrying at least one planet gear,
**characterised in that**, when the transmission unit (1) is applied to the bicycle, from the rotational members a first rotational member (27) is connected to the frame, a second rotational member (29) is connected to the transmission (15), and the third rotational member (31) is connected to the electromotor (33) or the wheel hub (11), and **in that** the planetary gear set is concentric to the shaft (9) and in addition to said planet gear comprises at least one further planet gear which is carried by the planet carrier while the rotational members are concentric to one another.

2. A transmission unit as claimed in claim 1, **characterised in that** the second rotational member (29) is connected to the input of the transmission (15) and the third rotational member (31) is connected to the electromotor (33).

3. A transmission unit as claimed in claim 2, **characterised in that** the planetary gear set (25) is arranged between the electromotor (33) and the input of the transmission (15), the first rotational member (27) being constituted by the ring gear.

4. A transmission unit as claimed in claim 1, **characterised in that** the second rotational member (29) is connected to the input of the transmission (15) and the third rotational member (31) is connected to the wheel hub.

5. A transmission unit as claimed in claim 4, **characterised in that** the first rotational member (27) is constituted by the planet carrier of which the planet gears form at least two pairs of mutually engaging planet gears, one planet gear of each pair engaging the ring gear and the other planet gear engaging the sun gear.

6. A transmission unit as claimed in claim 2, 3, 4 or 5, **characterised in that** the first rotational member (27) of the planetary gear set (25) is connected to a clutch element (45) which protrudes from between the wheel hub (11) and the input of the transmission to beyond the wheel hub (11) and, when the transmission unit is applied to the bicycle, is connected to the frame of the bicycle.

7. A transmission unit as claimed in any one of the preceding claims, **characterised in that** the electromotor (33) is a radial flux motor.

8. A transmission unit as claimed in any one of the preceding claims, **characterised in that** the input of the transmission seen in axial direction is exclusively arranged on one side of the transmission (15).

9. A transmison unit as claimed in any one of the preceding claims, **characterised in that** the transmission unit comprises a torque sensor for sensing the torque on the driving gear, as well as a control unit coupled to the torque sensor and the electromotor (33), which sensor, if it does not sense any torque, does not cause the electromotor to apply torque either.

10. A transmission unit as claimed in claim 9, **characterised in that** the control unit is arranged in the wheel hub (11).

11. A transmission unit as claimed in claim 9 or 10, **characterised in that** the torque sensor is arranged in the wheel hub (11).

12. A transmission unit as claimed in claim 9, 10 or 11, **characterised in that** the control unit causes the electromotor (33) to apply counter torque while the transmission (15) is being switched, which counter torque is opposed to the drive torque applied by the driving gear during operation.

13. A transmission unit as claimed in any one of the preceding claims, **characterised in that** the transmission (15) is an automatic transmission which switches between the transmission ratios in dependence on the rpm and/or the driving torque on the input.

14. A transmission unit as claimed in any one of the preceding claims, **characterised in that** the transmission (15) comprises two parallel driving lines at least one of which always transmitting the drive torque.

15. A transmission unit as claimed in any one of the preceding claims, **characterised in that** the transmission (15) comprises a switching element (45) that protrudes to beyond the wheel hub from between the shaft and the input.

## Patentansprüche

1. Getriebeeinheit (1) für ein Zweirad, das folgende Komponenten umfasst:
- eine Welle (9), die bei der Verwendung der Getriebeeinheit in dem Zweirad mit einem Rahmen des Zweirads verbunden ist,
- eine um die Welle (9) drehbare Radnabe (11),
- ein in der Radnabe (11) konzentrisch angeordnetes Getriebe (15) mit mindestens zwei verschiedenen Übersetzungsverhältnissen, wobei das Getriebe (15) mit einem Stützkörper (17) versehen ist, der mit der Welle (9) verbunden ist, sowie mit einem Eingang (19) und einem Ausgang (21), die konzentrisch zur Radnabe (11) angeordnet sind, wobei der Eingang (19) mit einem Antriebsrad verbunden ist,
- einen in der Radnabe (11) konzentrisch angeordneten Elektromotor (33) mit einem Stator (35) und einem Rotor (37), wobei der Stator bei Verwendung der Getriebeeinheit in dem Zweirad mit dem Rahmen oder der Welle (9) des Zweirads verbunden ist und der Rotor (37) mit dem Eingang (19) verbunden ist, und
- einen in der Radnabe (11) vorhandenen Planetensatz (25) mit mindestens drei Drehkörpern, die durch ein Sonnenrad, ein Hohlrad und einen Planetenradträger gebildet werden, der mindestens ein Planetenrad trägt,
**dadurch gekennzeichnet, dass**, bei Verwendung der Getriebeeinheit (1) im Zweirad, von den Drehkörpern ein erster Drehkörper (27) mit dem Rahmen verbunden ist, ein zweiter Drehkörper (29) mit dem Getriebe (15) verbunden ist und der dritte Drehkörper (31) mit dem Elektromotor (33) oder der Radnabe (11) verbunden ist und dass der Planetensatz konzentrisch zur Welle (9) angeordnet ist und neben dem erwähnten Planetenrad mindestens ein weiteres Planetenrad umfasst, das von dem Planetenträger getragen wird, wobei die Drehkörper konzentrisch zueinander angeordnet sind.

2. Getriebeeinheit nach Anspruch 1, **dadurch gekennzeichnet, dass** der zweite Drehkörper (29) mit dem Eingang des Getriebes (15) und der dritte Drehkörper (31) mit dem Elektromotor (33) verbunden ist.

3. Getriebeeinheit nach Anspruch 2, **dadurch gekennzeichnet, dass** der Planetensatz (25) zwischen dem Elektromotor (33) und dem Eingang des Getriebes (15) angeordnet ist, wobei der erste Drehkörper (27) durch das Hohlrad gebildet wird.

4. Getriebeeinheit nach Anspruch 1, **dadurch gekennzeichnet, dass** der zweite Drehkörper (29) mit dem Ausgang des Getriebes (15) und der dritte Drehkörper (31) mit der Radnabe verbunden ist.

5. Getriebeeinheit nach Anspruch 4, **dadurch gekennzeichnet, dass** der erste Drehkörper (27) durch den Planetenträger gebildet wird, dessen Planetenräder mindestens zwei Paare von ineinander eingreifenden Planetenrädern bilden, wobei ein Planetenrad eines jeden Paares in das Hohlrad eingreift und das andere Planetenrad in das Sonnenrad eingreift.

6. Getriebeeinheit nach einem der Ansprüche 2, 3, 4 oder 5, **dadurch gekennzeichnet, dass** der erste Drehkörper (27) des Planetensatzes (25) mit einem Kupplungselement (45) verbunden ist, das zwischen der Radnabe (11) und dem Eingang des Getriebes hindurch bis über die Radnabe (11) hinausreicht und bei Verwendung der Getriebeeinheit im Zweirad mit dem Rahmen des Zweirads verbunden ist.

7. Getriebeeinheit nach einem der vorangegangenen Ansprüche, **dadurch gekennzeichnet, dass** der Elektromotor (33) als Radialflussmotor ausgeführt ist.

8. Getriebeeinheit nach einem der vorangegangenen Ansprüche, **dadurch gekennzeichnet, dass** der Eingang des Getriebes, in axialer Richtung gesehen, nur auf einer Seite des Getriebes (15) vorhanden ist.

9. Getriebeeinheit nach einem der vorangegangenen Ansprüche, **dadurch gekennzeichnet, dass** die Getriebeeinheit einen Drehmomentsensor für die Messung des Drehmoments am Antriebsrad sowie eine mit dem Drehmomentsensor und dem Elektromotor (33) verbundene Regeleinheit umfasst, die verhindert, dass der Elektromotor ein Drehmoment erzeugt, wenn der Drehmomentsensor kein Drehmoment misst.

10. Getriebeeinheit nach Anspruch 9, **dadurch gekennzeichnet, dass** die Regeleinheit in der Radnabe (11) angeordnet ist.

11. Getriebeeinheit nach einem der Ansprüche 9 oder 10, **dadurch gekennzeichnet, dass** der Drehmomentsensor in der Radnabe (11) angeordnet ist.

12. Getriebeeinheit nach einem der Ansprüche 9, 10 oder 11, **dadurch gekennzeichnet, dass** die Regeleinheit beim Schalten des Getriebes (15) dafür sorgt, dass der Elektromotor (33) ein Gegendrehmoment erzeugt, das entgegen dem während des Betriebs von dem Antriebsrad erzeugten Antriebsdrehmoment wirkt.

13. Getriebeeinheit nach einem der vorangegangenen Ansprüche, **dadurch gekennzeichnet, dass** das Getriebe (15) als Automatikgetriebe ausgeführt ist, das in Abhängigkeit von der Drehzahl und/oder dem am Eingang anliegenden Antriebsdrehmoment die Übersetzungsverhältnisse wechselt.

14. Getriebeeinheit nach einem der vorangegangenen Ansprüche, **dadurch gekennzeichnet, dass** das Getriebe (15) zwei parallele Antriebsstränge umfasst, von denen immer mindestens einer das Antriebsdrehmoment weiterleitet.

15. Getriebeeinheit nach einem der vorangegangenen Ansprüche, **dadurch gekennzeichnet, dass** das Getriebe (15) ein Schaltelement (45) umfasst, das zwischen der Welle und dem Eingang hindurch bis über die Radnabe hinausreicht.

## Revendications

1. Unité de transmission (1) pour un cycle, comprenant:
- un axe (9) qui, lors de l'utilisation de l'unité de transmission dans le cycle, est relié à un cadre du cycle,
- un moyeu de roue (11) tournant autour de l'axe (9),
- une transmission (15) concentrique se trouvant dans le moyeu de roue (11) et ayant au moins deux rapports de réduction différents, laquelle transmission (15) est pourvue d'un corps de soutien (17) relié à l'axe (9), ainsi que d'une entrée (19) et d'une sortie (21) concentriques au moyeu de roue (11), où l'entrée (19) est reliée à une roue motrice,
- un électromoteur (33) concentrique se trouvant dans le moyeu de roue (11) et ayant un stator (35) et un rotor (37), où le stator, lors de l'utilisation de l'unité de transmission dans le cycle, est relié au cadre ou à l'axe (9) du cycle et où le rotor (37) est relié à l'entrée (19), et
- un train d'engrenage planétaire (25) se trouvant dans le moyeu de roue (11) et ayant au moins trois corps rotatifs qui sont formés d'un planétaire intérieur « soleil », d'un planétaire extérieur « couronne » et d'un porte satellites portant au moins un satellite,
**caractérisée en ce que** parmi les corps rotatifs, un premier corps rotatif (27) est relié, lors de l'utilisation de l'unité de transmission (1) dans le cycle, au cadre, un deuxième corps rotatif (29) est relié à la transmission (15), et le troisième corps rotatif (31) est relié à l'électromoteur (33) ou au moyeu de roue (11), et **en ce que** le train d'engrenage planétaire est concentrique par rapport à l'axe (9) et comprend, outre le satellite mentionné, au moins un autre satellite porté par le porte satellites, où les corps rotatifs sont concentriques les uns par rapport aux autres.

2. Unité de transmission selon la revendication 1, **caractérisée en ce que** le deuxième corps rotatif (29) est relié à l'entrée de la transmission (15) et le troisième corps rotatif (31) est relié à l'électromoteur (33).

3. Unité de transmission selon la revendication 2, **caractérisée en ce que** le train d'engrenage planétaire (25) se trouve entre l'électromoteur (33) et l'entrée de la transmission (15), où le premier corps rotatif (27) est formé par le planétaire extérieur « couronne ».

4. Unité de transmission selon la revendication 1, **caractérisée en ce que** le deuxième corps rotatif (29) est relié à la sortie de la transmission (15) et le troisième corps rotatif (31) est relié au moyeu de roue.

5. Unité de transmission selon la revendication 4, **caractérisée en ce que** le premier corps rotatif (27) est formé par le porte satellites dont les satellites forment au moins deux paires de satellites qui s'engrènent l'un dans l'autre, où, pour chaque paire, un des satellites s'engrène dans le planétaire extérieur « couronne » et l'autre satellite s'engrène dans le planétaire intérieur « soleil ».

6. Unité de transmission selon la revendication 2, 3, 4 ou 5, **caractérisée en ce que** le premier corps rotatif (27) du train d'engrenage planétaire (25) est relié à un élément de raccordement (45) qui passe entre le moyeu de roue (11) et l'entrée de la transmission et s'étend jusqu'à l'extérieur du moyeu de roue (11) et, lors de l'utilisation de l'unité de transmission dans le cycle, est relié au cadre du cycle.

7. Unité de transmission selon une des revendications précédentes, **caractérisée en ce que** l'électromoteur (33) est un moteur à flux radial.

8. Unité de transmission selon une des revendications précédentes, **caractérisée en ce que** l'entrée de la transmission, vue dans le sens axial, se trouve uniquement sur un des côtés de la transmission (15).

9. Unité de transmission selon une des revendications précédentes, **caractérisée en ce que** l'unité de transmission comprend un capteur de couple pour la mesure du couple sur la roue motrice, ainsi qu'une unité de régulation couplée au capteur de couple et à l'électromoteur (33) et qui, dans le cas où aucun couple n'est mesuré par le capteur de couple, ne laisse pas l'électromoteur fournir de couple.

10. Unité de transmission selon la revendication 9, **caractérisée en ce que** l'unité de régulation se trouve dans le moyeu de roue (11).

11. Unité de transmission selon la revendication 9 ou 10, **caractérisée en ce que** le capteur de couple se trouve dans le moyeu de roue (11).

12. Unité de transmission selon la revendication 9, 10 ou 11, **caractérisée en ce que** l'unité de régulation, pendant le changement de vitesses de la transmission (15), fait fournir par l'électromoteur (33) un couple inversé qui est opposé au couple moteur fourni par la roue motrice pendant fonctionnement.

13. Unité de transmission selon une des revendications précédentes, **caractérisée en ce que** la transmission (15) est une transmission automatique qui, en fonction du régime et/ou du couple moteur à l'entrée, change le rapport de réduction.

14. Unité de transmission selon une des revendications précédentes, **caractérisée en ce que** la transmission (15) comprend deux lignes motrices parallèles dont au moins une achemine toujours le couple moteur.

15. Unité de transmission selon une des revendications précédentes, **caractérisée en ce que** la transmission (15) comprend un élément de commutation (45) qui passe entre l'axe et l'entrée et s'étend jusqu'à l'extérieur du moyeu de roue.
